Europäisches Patentamt

European Patent Office

Office européen des brevets

(19)

(11) Numéro de publication : **0 090 120**
**B1**

(12) **FASCICULE DE BREVET EUROPÉEN**

(45) Date de publication du fascicule du brevet :
18.09.85

(51) Int. Cl.⁴ : **A 01 F 15/14**

(21) Numéro de dépôt : **82400591.2**

(22) Date de dépôt : **31.03.82**

(54) **Dispositif de liage au moyen de deux ficelles pour presses à balles cylindriques.**

(43) Date de publication de la demande :
05.10.83 Bulletin 83/40

(45) Mention de la délivrance du brevet :
18.09.85 Bulletin 85/38

(84) Etats contractants désignés :
DE FR GB IT NL

(56) Documents cités :
DE-A- 2 620 807
US-A- 2 971 455

(73) Titulaire : **JOHN DEERE (Société Anonyme)**
**8, Quai de la Madeleine**
**F-45000 Orléans (FR)**

(72) Inventeur : **Illy, Pierre**
**Rue des Chenevières**
**F-70100 Gray-La-Ville (FR)**

(74) Mandataire : **Pruvost, Marc Henri et al**
**Cabinet ORES 6, Avenue de Messine**
**F-75008 Paris (FR)**

## Description

La présente invention concerne les presses à balles cylindriques ou rondes.

Ces presses sont d'un type bien connu et comprennent des jeux de bandes ou courroies qui, par leur déplacement, forment par enroulement à l'intérieur d'une chambre ménagée dans le corps de la presse une balle de forme générale cylindrique ou ronde à partir de produits de récolte, notamment de fourrage ou de foin, ramassés sur le champ au cours de la progression de la presse. Il est usuel dans les machines de ce type, avant le déchargement de la balle cylindrique, d'assurer son liage à l'intérieur de la chambre de la presse.

Cette opération, qui est réalisée à l'aide d'un lien constitué généralement par une ficelle, est effectuée de façon connue au moyen d'un organe guide-ficelle déplacé transversalement au sens de marche de la presse devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe guide-ficelle, cette ficelle forme autour de la balle, lorsqu'elle est appelée par la rotation de cette dernière, des spires hélicoïdales assurant un liage sur toute la longueur de cette balle.

Cet organe guide-ficelle peut être constitué par un bras guide-ficelle monté de façon pivotante ou par un autre organe déplacé linéairement devant l'orifice d'entrée des produits de récolte dans la chambre de la presse.

Afin de réduire le temps nécessaire au liage de la balle, qui représente un temps mort pendant lequel aucun ramassage des produits de récolte ne peut généralement avoir lieu sur une presse de type classique, on a déjà proposé (Brevets US-A-3 064 556 et US-A-4 158 331 ainsi que Demande de Brevet Européen EP-A-0 041 444) de prévoir sur la presse deux bras montés de façon pivotante et se déplaçant simultanément, en couvrant chacun sensiblement la moitié de la largeur de l'orifice d'entrée précité des produits de récolte, chaque bras servant de guide à une ficelle de liage. Ainsi, on peut réduire sensiblement de moitié le temps de liage, sans pour cela devoir renoncer à une distance entre les spires de ficelle suffisamment faible pour éviter toute dispersion des produits de récolte lorsque la balle est déchargée sur le sol.

Il existe toutefois, dans les dispositifs de liage au moyen de deux ficelles guidées chacune par un bras distinct proposés jusqu'ici, un risque potentiel de liage défectueux de la balle si l'une des ficelles n'est pas saisie par elle au moment du déclenchement de l'opération de liage. Dans un tel cas, le liage est alors limité, dans les dispositifs connus, à une moitié de balle, et il faut recommencer l'opération de liage, ou bien les produits de récolte peuvent s'éparpiller lors du déchargement de la balle sur le sol.

Un but de l'invention est de créer un dispositif de liage au moyen de deux ficelles pour presses à balles cylindriques apportant une solution à ce problème.

Dans les dispositifs existants comportant deux bras guide-ficelle, ces bras sont montés de façon pivotante généralement autour de points séparés et ils sont actionnés de façon à balayer la trajectoire requise transversalement à la presse par des déplacements de sens opposés. Ce montage à pivotement des bras peut avoir lieu soit au voisinage des côtés de la presse, soit au contraire au voisinage de son axe longitudinal médian.

Ces dispositifs exigent en conséquence une transmission avec inversion de sens de pivotement dans la commande simultanée des deux bras séparés, ce qui complique le mécanisme de commande et augmente en conséquence les risques de dérangement dans les dures conditions de travail qui sont celles des machines agricoles de ce type.

Un autre but de l'invention est d'apporter une solution à ce problème et de créer un dispositif de liage comportant deux bras guide-ficelle jumelés se déplaçant dans le même sens lors du liage.

L'invention concerne en conséquence un dispositif de liage au moyen de deux ficelles pour presses à balles cylindriques, du type comportant deux organes guide-ficelles montés sur le châssis de la presse de façon, à se déplacer transversalement à la presse sensiblement devant l'orifice d'entrée des produits de récolte dans la chambre de cette presse au cours de l'opération de liage, afin d'assurer le guidage des ficelles et ainsi la formation de spires hélicoïdales de ficelles autour de la balle pour son liage, caractérisé en ce qu'il est prévu, entre la boîte à ficelle et les organes guide-ficelles, un différentiel comprenant deux éléments planétaires montés libres en rotation sur un même arbre ou sur deux arbres reliés ensemble, une ficelle passant autour de chacun de ces éléments planétaires afin d'assurer l'entraînement en rotation desdits éléments lors de l'appel des deux ficelles par la balle pour le liage, et un élément satellite calé angulairement sur cet arbre et coopérant fonctionnellement avec chacun des éléments planétaires précités par un organe satellite, afin d'assurer l'entraînement en rotation dudit arbre simplement lors de la rotation conjointe de ces deux éléments planétaires, l'arbre étant relié directement ou indirectement aux organes guide-ficelles pour provoquer leur déplacement transversal en vue du liage.

Ainsi, dans le cas où une seule des deux ficelles est saisie par la balle au début de l'opération de liage, le différentiel sur lequel les deux ficelles de liage passent entre la boîte à ficelles et les organes guide-ficelles agit pour éviter l'entraînement en rotation de l'arbre provoquant le déplacement transversal des organes guide-ficelles, et l'opération de liage n'est pas déclenchée. Le conducteur du tracteur auquel la presse est attelée peut alors intervenir pour remédier à ce défaut et on évite avec certitude tout déchargement d'une balle liée de façon défectueuse et ainsi tout éparpillement des produits de récolte sur le sol.

Suivant un mode de réalisation possible, chacun des deux éléments précités du différentiel est formé par une poulie montée libre en rotation sur un arbre et sur laquelle l'une des ficelles de liage s'enroule entre la boîte à ficelles et l'organe guide-ficelle conjugué, les poulies présentant des dentures en regard entre lesquelles est monté un porte-satellites calé angulairement sur l'arbre précité et portant au moins un satellite engrenant avec ces dentures. Ainsi, quand une seule poulie est entraînée par la ficelle enroulée sur elle du fait que seule cette ficelle est saisie par la balle au moment du déclenchement de l'opération de liage, la rotation de cette poulie provoque simplement, par l'intermédiaire du ou des satellites engrenant avec sa denture, la rotation en sens opposé de l'autre poulie, qui du fait que la ficelle enroulée sur elle n'est soumise à aucune traction peut tourner librement, sans entraînement de l'arbre commandant le déplacement des organes guide-ficelles.

L'arbre entraîné par le différentiel peut être par exemple l'arbre d'entrée d'un réducteur ou dispositif analogue assurant l'entraînement des organes guide-ficelles. Ces organes peuvent être constitués par des bras montés de façon pivotante sur la presse, d'une manière en soi connue, ou bien, suivant une variante de réalisation, par des organes animés d'un déplacement linéaire.

Suivant une autre particularité de l'invention, les organes guide-ficelles sont constitués par deux bras jumelés rendus solidaires l'un de l'autre, montés à pivotement sur le châssis de la presse en un même point et se déplaçant par pivotement de façon conjointe pour l'opération de liage, ces bras étant disposés de telle sorte qu'au moins leurs extrémités libres soient écartées l'une et l'autre afin de former, lors du pivotement des bras au cours du liage, deux spires hélicoïdales de ficelles écartées l'une de l'autre selon le pas requis autour de la balle.

Ainsi, suivant une disposition avantageuse, l'écartement entre les extrémités libres des bras guide-ficelles est en principe égal à la distance séparant normalement deux spires consécutives de ficelles de liage autour de la balle, cette dernière distance étant bien entendu fonction à la fois de la vitesse périphérique de la balle et de la vitesse de débattement angulaire du bras. On obtient ainsi la formation, autour de la balle, de spires de ficelles dont l'écartement est en principe égal à la moitié de celui qui serait obtenu avec un seul bras ou bien, pour un écartement donné entre les spires, assurant une rétention satisfaisante des produits de récolte en balle, la vitesse de débattement angulaire des bras peut être doublée, ce qui réduit d'autant le temps de liage pendant lequel le ramassage des produits de récolte n'a pas lieu.

Suivant une autre particularité encore, afin de maintenir dans les ficelles la tension requise pour qu'elles enserrent les gorges des poulies en assurant en conséquence la rotation, il est prévu pour chaque ficelle un frein, de préférence en amont et en aval du différentiel. De tels freins peuvent être constitués d'une manière simple par une surface d'appui associée à une autre surface sollicitée vers la précédente sous l'effet d'un organe élastique.

Suivant une autre particularité, le point de montage à pivotement des bras guide-ficelles sur la presse est placé, par rapport à l'axe longitudinal de cette presse, de telle sorte qu'au moins dans la position correspondant à la fin du liage, la trajectoire décrite par l'extrémité des bras s'écarte nettement de l'axe transversal de la presse, donc de la balle de façon telle qu'une tangente à l'arc décrit par l'extrémité des bras fasse, vers l'extrémité de la trajectoire de ceux-ci un angle de valeur notable, et judicieusement d'au moins 60 à 80° avec une ligne transversale à la presse. En d'autres termes, les bras font alors un angle de 60 à 80° environ avec la direction longitudinal de la presse. De cette manière, on obtient vers la fin du liage, du fait de cette position, une concentration des spires et finalement une quasi-superposition, qui assure le maintien des produits de récolte à l'extrémité de la balle. un phénomène analogue est obtenu au voisinage de l'extrémité correspondant au début du liage par le temps mort qui intervient entre le moment de l'appel des ficelles par la balle et le moment de l'enclenchement du mécanisme provoquant le pivotement des bras guide-ficelles, mécanisme qui peut comporter de façon connue un moyeu débrayable ou un dispositif analogue.

L'invention concerne également les presses à balles cylindriques équipées d'un dispositif de liage du type décrit.

La description qui va suivre, faite en regard des dessins annexés, donnés à titre non limitatif, permettra de mieux comprendre l'invention.

La Figure 1 est une vue en perspective d'une presse à balles cylindriques à laquelle l'invention est applicable.

La Figure 2 est une vue en plan schématique montrant un mode de réalisation comportant deux bras jumelés.

La Figure 3 est une vue en coupe diamétrale d'un différentiel utilisable dans le cas du mode de réalisation visible sur la Fig. 2.

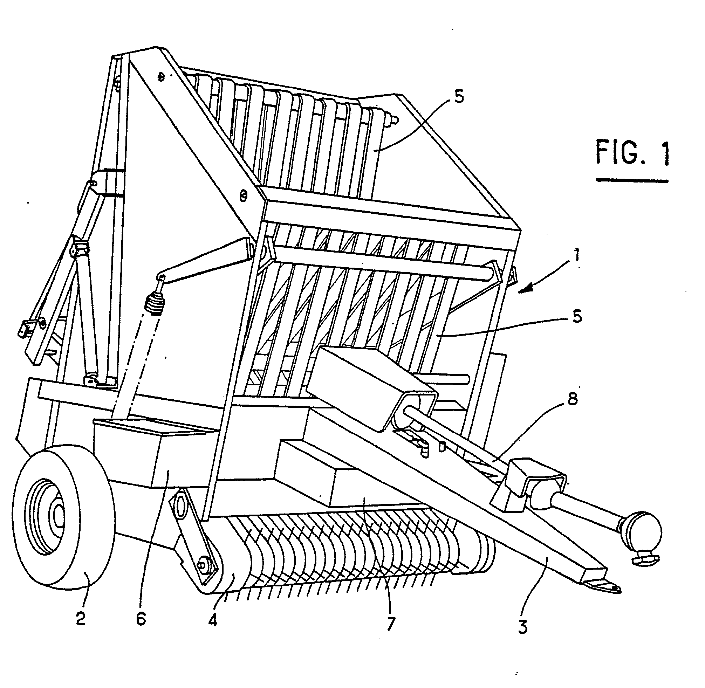

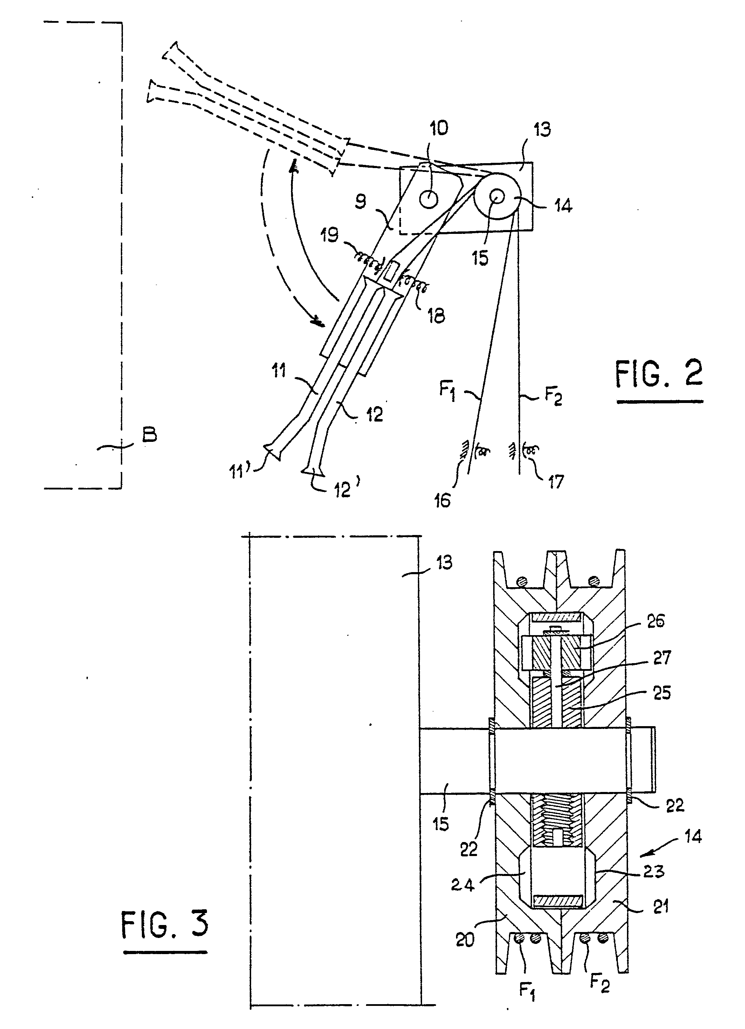

On a montré sur la Fig. 1 une presse à balles cylindriques ou rondes comportant un corps 1 supporté par un châssis équipé de roues 2, la presse étant destinée à être attelée à un tracteur au moyen d'un timon ou d'une flèche d'attelage 3. Un ramasseur 4 est prévu de façon classique à la partie avant de la presse de manière à ramasser les produits de récolte, tels que du fourrage, sur le champ, et à les amener à un orifice d'entrée ménagé à la partie avant de la presse, en vue de leur transfert à la chambre de formation de la balle, dans laquelle une balle est formée par enroulement entre des bandes ou courroies 5 tournant dans le sens approprié d'une manière en

soi connue. On a indiqué en 6 sur la Fig. 1 la boîte à ficelle de liage et en 7 un carter dans lequel est monté le dispositif de commande de liage, qui est illustré par les Fig. 2 et 3. La référence 8 désigne un arbre d'entraînement destiné à être relié à l'arbre de prise de force du tracteur auquel la presse est attelée.

On se reportera maintenant à la Fig. 2, qui montre en plan de façon schématique, comme indiqué ci-avant, un agencement utilisable suivant l'invention. Sur cette Fig. 2, on a indiqué en 9 un support qui est monté de façon pivotante en 10 et qui porte deux bras guide-ficelles 11, 12. Comme visible sur le dessin, les parties de ces bras 11, 12 fixées sur le support 9 sont parallèles, tandis que les extrémités des bras indiquées en 11′ et 12′ vont en divergeant. Cette divergence est telle que l'écartement entre les extrémités des deux tubes formant les bras guide-ficelles 11, 12 soient sensiblement égal au pas désiré entre les spires hélicoïdales de ficelles formées autour de la balle lors du liage.

Sur cette Fig. 2, on a indiqué en 13 le carter d'un réducteur, qui peut être de tout type approprié et qui porte un différentiel 14, monté sur l'arbre d'entrée 15 du réducteur 13. L'arbre 10 sur lequel le support 9 portant les bras guide-ficelles 11, 12 est monté de façon pivotante forme l'arbre de sortie du réducteur 13, et un moyeu débrayable ou dispositif analogue est prévu judicieusement entre ce réducteur 13 et cet arbre de sortie 10, d'une manière en soi connue, pour permettre le rappel des bras de guidage 11, 12 d'un côté à l'autre de la presse avant l'opération de liage.

Comme indiqué schématiquement sur la Fig. 2, des freins 16, 17 et 18, 19 sont prévus respectivement en amont et en aval du différentiel 14, de manière à agir sur les ficelles indiquées en F1 et F2 sur cette même Fig. 2, pour maintenir dans lesdites ficelles la tension requise pour une raison qui sera indiquée plus loin.

On se reportera maintenant à la Fig. 3, qui est une vue en coupe montrant un mode de réalisation de différentiel utilisable suivant l'invention dans le dispositif que montre la Fig. 2.

Dans le cas du mode de réalisation considéré, le différentiel est formé de deux poulies 20, 21 qui sont montées folles l'une à côté de l'autre sur l'arbre d'entrée 15 du réducteur 13 et qui sont positionnées axialement par des bagues fendues indiquées en 22. Les ficelles F1, F2 s'enroulent dans les gorges de ces poulies 20, 21, en formant par exemple une ou deux spires.

Les poulies 20, 21, présentent sur leurs faces en regard chacune une cavité 23 dans laquelle est ménagée une denture en couronne 24.

Il est prévu sur l'arbre 15 d'entrée du réducteur 13, dans la chambre ménagée par les cavités jumelées 23 des deux poulies 20, 21, une bague 25 qui est calée angulairement sur cet arbre d'entrée 15. Cette bague, qui forme un porte-satellites, supporte au moins un pignon satellite 26 qui est monté fou autour d'un axe radial 27 et qui engrène avec les dentures en couronne 24 des deux poulies 20, 21.

On décrira maintenant le fonctionnement de l'agencement prévu suivant l'invention.

La position de début de liage des bras 11, 12 a été indiquée en pointillé sur la Fig. 2. On a représenté également de façon très schématique sur cette Fig. 2 une balle B qui doit être soumise au liage.

Le déclenchement de l'opération de liage peut être assuré d'une manière en soi classique par le conducteur du tracteur, ou bien de façon automatique par un organe agissant quand la balle formée dans la presse a atteint le diamètre requis. Au moment de ce déclenchement, les bras guide-ficelles 11, 12 sont amenés dans la position de départ indiquée en pointillé sur la Fig. 2, par exemple sous l'action d'un ou plusieurs ressorts, d'une manière en soi usuelle, et ce déplacement brusque libère les extrémités libres des ficelles, qui ainsi vont être saisies par la balle pour le liage de celle-ci.

Lorsque les extrémités libres des ficelles sont saisies par la balle, ces ficelles, qui sont enroulées autour des poulies 20, 21 du différentiel 14, font tourner ces deux poulies ensemble et, du fait de la liaison qui est réalisée par les dentures en couronne 24 des poulies, le pignon satellite 26 et la bague formant porte-satellites 25 avec l'arbre d'entrée 15 du réducteur, il se produit par l'intermédiaire de celui-ci et de l'arbre de sortie 10 un entraînement avec pivotement du support 9 et en conséquence des bras guide-ficelles 11, 12, pour passer de la position de départ indiquée en pointillé jusqu'à la position de fin de liage indiquée en traits pleins sur la Fig. 2.

Les freins 16, 17 et 18, 19 agissant sur les ficelles F1 et F2 maintiennent celles-ci sous une tension suffisante pour que la ou les spires formées autour des poulies 20 et 21 soient suffisamment serrées pour assurer l'entraînement en rotation de ces poulies et par conséquent le pivotement du support 9 et des bras guide-ficelles 11, 12 lors de l'appel des ficelles par la balle B.

Etant donné qu'il est prévu, suivant l'agencement faisant l'objet de l'invention, deux bras guide-ficelles jumelés 11, 12 dont les extrémités sont écartées d'une distance correspondant au pas des spires hélicoïdales devant être obtenues lors du liage, on comprend aisément que la vitesse de balayage, c'est-à-dire de débattement angulaire du support 9 et des bras guide-ficelles 11, 12 autour de l'axe 10 peut être doublée par rapport à la vitesse normalement requise pour obtenir le même pas entre les spires hélicoïdales, ce qui réduit d'autant le temps nécessaire au liage et en conséquence le temps pendant lequel la presse ne peut pas ramasser les produits de récolte.

Comme indiqué précédemment, il est prévu entre la sortie du réducteur 13 et l'arbre 10 portant le support 9 un moyeu débrayable ou un dispositif analogue. Etant donné qu'il existe un certain temps de réponse pour ce moyeu débrayable, il se produit au début du liage une concentration des spires vers une extrémité de la balle, ce qui retient les produits de récolte à cet endroit.

On notera à l'examen de la Fig. 2, que le réducteur 13 et en conséquence l'arbre 10 qui forme l'axe de pivotement du support 9 et des bras guide-ficelles 11, 12 sont décalés latéralement par rapport à l'axe longitudinal médian de la presse, donc de la balle B qui est formée dans celle-ci et qui est ensuite soumise au liage. Ce décalage est prévu du côté correspondant à la position de début de liage. En conséquence, comme cela apparaît nettement sur la Fig. 2, les bras guide-ficelles 11, 12, occupent au début du liage une position qui fait avec la direction longitudinale de la presse un angle de faible valeur, cet angle pouvant être par exemple compris entre 10 et 20°. Au contraire, vers la fin du liage, les bras guide-ficelles 11, 12 occupent une position qui se rapproche d'une position transversale et qui fait avec la direction longitudinale de la presse un angle de valeur nettement plus grande, pouvant être compris par exemple entre 60 et 80°. Il en résulte, comme on le comprend aisément, une concentration de spires également vers l'extrémité de la balle correspondant à la fin du liage, ce qui représente ici encore un avantage pour le maintien des produits de récolte.

On supposera maintenant qu'une seule des deux ficelles est saisie par la balle au début du liage. Dans ce cas, la traction résultant de l'appel de la ficelle par la balle n'est exercée que sur cette seule ficelle et en conséquence une seule des deux poulies 20, 21 est entraînée en rotation. Etant donné qu'aucune traction n'est exercée sur la seconde ficelle, la ou les spires de ficelle entourant l'autre poulie ne sont pas serrées. Il en résulte que cette autre poulie peut tourner librement par rapport à cette ficelle. Il résulte alors de l'entraînement en rotation de la première poulie, par l'intermédiaire du pignon satellite 26 et des dentures 24 un entraînement en rotation en sens opposé de la seconde poulie autour de l'arbre 15, de sorte que la bague formant porte-satellites 25 ne tourne pas et qu'il n'en résulte en conséquence aucun entraînement en rotation de l'arbre 15 et du réducteur. Ainsi, aucun mouvement de pivotement n'est transmis au support 9 et aux bras guide-ficelles 11, 12, et l'opération de liage n'est pas déclenchée. Ce déclenchement n'aura lieu que lorsque la deuxième ficelle aura été saisie par la rotation de la balle. Eventuellement, si le liage ne se déclenchait pas, le conducteur serait alors prévenu du défaut et pourrait y remédier.

On voit ainsi que l'agencement qui fait l'objet de l'invention permet d'obtenir un liage de la balle uniquemnt lorsque les deux ficelles sont saisies par celle-ci, ce liage étant alors réalisé de façon accélérée sans devoir renoncer à un écartement acceptable entre les spires de ficelle entourant la balle. En outre, les produits de récolte sont retenus de façon convenable aux extrémités de la balle du fait de la concentration alors produite entre les spires.

## Revendications

1. Dispositif de liage au moyen de deux ficelles (F1, F2) pour presses à balles cylindriques, du type comportant deux organes guide-ficelles (11, 12) montés sur le châssis (1) de la presse de façon à se déplacer transversalement à la presse, sensiblement devant l'orifice d'entrée des produits de récolte dans la chambre de cette presse, au cours de l'opération de liage afin d'assurer le guidage des ficelles (F1, F2) et ainsi la formation de spires hélicoïdales de ficelles autour de la balle pour son liage, caractérisé en ce qu'il est prévu, entre la boîte à ficelle (6) et les organes guide-ficelles (11, 12), un différentiel (14) comprenant deux éléments planétaires (20, 21) montés libres en rotation sur un même arbre (15) ou sur deux arbres reliés ensemble, une ficelle (F1, F2) passant autour de chacun de ces éléments planétaires (20, 21) afin d'assurer l'entraînement en rotation desdits éléments lors de l'appel des deux ficelles (F1, F2) par la balle pour le liage, et un élément satellite (25) calé angulairement sur cet arbre (15) et coopérant fonctionnellement avec chacun des éléments planétaires précités (20, 21) par un organe satellite (26), afin d'assurer l'entraînement en rotation dudit arbre simplement lors de la rotation conjointe de ces deux éléments planétaires, l'arbre étant relié directement ou indirectement aux organes guide-ficelles (11, 12) pour provoquer leur déplacement transversal en vue du liage.

2. Dispositif de liage suivant la revendication 1, caractérisé en ce que chacun des deux éléments du différentiel (14) est formé par une poulie (20, 21) montée libre en rotation sur un arbre (15) et sur laquelle l'une des ficelles de liage (F1, F2) s'enroule entre la boîte à ficelle (6) et l'organe guide-ficelle conjugué (11, 12), les poulies présentant des dentures en regard (24) entre lesquelles est monté un porte-satellites (25) calé angulairement sur l'arbre (15) et portant au moins un satellite (26) engrenant avec ces dentures (24).

3. Dispositif de liage suivant la revendication 1 ou 2, caractérisé en ce que l'arbre (15) entraîné par le différentiel est l'arbre d'entrée d'un réducteur (13) ou d'un dispositif analogue assurant l'entraînement des organes guide-ficelles (11, 12).

4. Dispositif de liage suivant la revendication 1 ou 2, caractérisé en ce que des freins (16, 17) et (18, 19) agissent sur les ficelles (F1, F2) en amont et/ou en aval du différentiel (14), afin de maintenir les ficelles (F1, F2) sous la tension requise lorsqu'elles s'enroulent autour des éléments ou poulies (20, 21), pour l'entraînement de ces derniers.

5. Dispositif de liage suivant la revendication 1 ou 2, caractérisé en ce que les organes guide-ficelles (11, 12) sont constitués par des bras montés de façon pivotante sur la presse sur le même pivot (10) ou sur des pivots séparés ou par des organes animés d'un déplacement linéaire.

6. Dispositif de liage suivant la revendication 5, caractérisé en ce que les organes guide-ficelles sont constitués par deux bras jumelés (11, 12) around each of said planetary elements (20, 21) whereby said elements are driven in rotation when the bale calls for the two twines (F1, F2) for the bale binding operation, and a satellite element (25) which is angularly fixed on said shaft (15) and which operatively co-operates with each of said planetary elements (20, 21) by means of a satellite member (26) thereby to drive said shaft in rotation simply upon joint rotation of said two planetary elements, the shaft being directly or indirectly connected to the twine guide members (11, 12) to cause transverse displacement thereof for the bale binding operation.

2. A binding apparatus according to claim 1 characterised in that each of the two elements of the differential (14) is formed by a pulley (20, 21) which is mounted freely rotatably on a shaft (15) and around which one of the binding twines (F1, F2) is wound between the twine box (6) and the combined twine guide member (11, 12), the pulleys having facing teeth (24) between which is mounted a satellite carrier member (25) which is angularly fixed on the shaft (15) and which carries at least one satellite (26) engaging with said teeth (24).

3. A binding apparatus according to claim 1 or claim 2 characterised in that the shaft (15) which is driven by the differential is the input shaft of a reducing unit (13) or a similar device for driving the twine guide members (11, 12).

4. A binding apparatus according to claim 1 or claim 2 characterised in that brakes (16, 17) and (18, 19) act on the twines (F1, F2) upstream and/or downstream of the differential (14) in order to maintain the twines (F1, F2) under the required tension when they pass around the elements or pulleys (20, 21) for driving same.

5. A binding apparatus according to claim 1 or claim 2 characterised in that the twine guide members (11, 12) comprise arms which are pivotally mounted on the press on the same pivot (10) or on separate pivots or members which are actuated with a linear displacement.

6. A binding apparatus according to claim 5 characterised in that the twine guide members comprise two arms (11, 12) which are arranged as a pair and which are fixed with respect to each other (carrier 9), the arms being mounted pivotably on the chassis of the press at the same point (10) and being displaced by pivotal movement jointly for the binding operation.

7. A binding apparatus according to claim 6 characterised in that at least the free ends (11', 12') of the twine guide arms (11, 12) are spaced apart from each other whereby, upon pivotal movement of the twine guide arms in the course of the binding operation, the twine guide arms form two helicoidal turns of twines which are spaced from each other at the required pitch around the bale.

8. A binding apparatus according to claim 5, claim 6 or claim 7 characterised in that the point at which the twine guide arms (11, 12) are pivotally mounted (axis 10) on the press is offset laterally on one side of the longitudinal centre line of the rendus solidaires l'un de l'autre (support 9), montés à pivotement sur le châssis de la presse en un même point (10) et se déplaçant par pivotement de façon conjointe pour l'opération de liage.

7. Dispositif de liage suivant la revendication 6, caractérisé en ce qu'au moins les extrémités libres (11', 12') des bras guide-ficelles (11, 12) sont écartés l'une de l'autre afin de former, lors du pivotement des bras guide-ficelles au cours du liage, deux spires hélicoïdales de ficelles écartées l'une de l'autre selon le pas requis autour de la balle.

8. Dispositif de liage suivant la revendicatioin 5, 6 ou 7, caractérisé en ce que le point de montage à pivotement des bras guide-ficelles (11, 12) (axe 10) sur la presse est décalé latéralement d'un côté de l'axe longitudinal de cette presse, de préférence du côté correspondant à la position de départ de liage afin d'obtenir une concentration des spires de ficelle autour de la balle vers l'extrémité de celle-ci correspondant à la fin du liage.

9. Presse à balles cylindriques ou rondes équipées d'un dispositif de liage suivant l'une quelconque des revendications précédentes.

## Claims

1. A binding apparatus using two twines (F1, F2) for round bale presses, of the type comprising two twine guide members (11, 12) which are mounted on the chassis (1) of the press in such a way as to be displaced transversely with respect to the presse, substantially in front of the opening for the intake of crop material into the chamber of the press, in the course of the binding operation, in order to provide for guiding the twines (F1, F2) and thus forming helicoidal turns of twines around the bale for binding thereof, characterised in that provided between the twine box (6) and the twine guide members (11, 12) is a differential (14) comprising two planetary elements (20, 21) which are freely rotatably mounted on the same shaft (15) or on two shafts which are connected together, a twine (F1, F2) passing press, preferably on the side corresponding to the starting position for the binding operation, in order to produce a concentration of turns of twine around the bale towards the end thereof, corresponding to the end of the binding operation.

9. Cylindrical or round bale press provided with a binding apparatus according to any one of the preceding claims.

## Patentansprüche

1. Vorrichtung zum Binden mit Hilfe von zwei Garnen (F1, F2) für Pressen von zylindrischen Ballen des Typs, der zwei Garnführungsorgane (11, 12) umfaßt, die auf dem Chassis (1) der Presse in der Weise montiert sind, daß sie sich quer zur Presse bewegen, und zwar genau vor einer Eintrittsöffnung für die Ernteprodukte in die Kammer dieser Presse und im Verlauf des Bindevorganges, um die Führung der Garne (F1) und (F2) und somit die Bildung von schraubenförmigen Umschlingungen der Garne um den Ballen zu dessen Bindung sicherzustellen, dadurch gekennzeichnet, daß zwischen dem Garnkasten (6) und den Garnführungsorganen (11, 12) ein Differential (14), das zwei Planetenelement (20, 21) umfaßt, die frei drehbar auf einer gleichen Welle (15) oder auf zwei zu einer Einrichtung verbundenen Wellen gelagert sind, wobei ein Garn (F1, F2) um jedes der Planetenelemente (20, 21) läuft, um die Drehmitnahme dieser Elemente sicherzustellen, wenn die beiden Garne (F1, F2) von dem Ballen zu Bindezwecken gezogen werden, und ein Satellitenelemente (25) vorgesehen sind, das winkelförmig auf der Welle (15) aufgekeilt ist und funktionell mit jedem der zuvor erwähnten Planetenelemente (20, 21) durch ein Satellitenorgan (26) zusammenwirkt, um die einfache Drehmitnahme der Welle bei gemeinsamer Rotation dieser beiden Planetenelemente sicherzustellen, wobei die Welle direkt oder indirekt mit den Garnführungsorganen (11, 12) verbunden ist, um deren Querversetzung im Hinblick auf die Bindung hervorzurufen.

2. Bindevorrichtung nach Anspruch 1, dadurch gekennzeichnet, daß jedes der beiden Differentialelemente (14) in Form einer Riemenscheibe (20, 21) ausgebildet ist, welche frei drehbar auf eine Welle (15) montiert ist und auf der eines der Bindegarne (F1, F2) zwischen dem Garnkasten (6) und den verbundenen Garnführungsorganen (11, 12) abrollt, wobei die Scheiben Stirnverzahnungen darbieten, zwischen denen ein Satellitenträger (25) montiert ist, der winkelförmig auf der Welle (15) aufgekeilt ist und wenigstens einen Satelliten (26) trägt, der mit diesen Verzahnungen (24) in Eingriff steht.

3. Bindevorrichtung nach Anspruch 1 oder 2, dadurch gekennzeichnet, daß die Welle (15), die durch das Differential angetrieben wird, die Eintrittswelle einer Reduziereinrichtung (13) oder einer analogen Vorrichtung ist, welche die Mitnahme der Garnführungsorgane (11, 12) sicherstellt.

4. Bindevorrichtung nach Anspruch 1 oder 2, dadurch gekennzeichnet, daß Bremsen (16, 17) und (18, 19) auf die Garne (F1, F2) stromauf-und/oder stromabwärts des Differentials (14) einwirken, um die Garne (F1, F2) unter der erforderlichen Spannung zu halten, wenn sie sich um die Elemente oder Riemenscheiben (20, 21) schlingen, und zwar zur Mitnahme der Letzteren.

5. Bindevorrichtung nach Anspruch 1 oder 2, dadurch gekennzeichnet, daß die Garnführungsorgane (11, 12) durch Arme, die schwenkbar auf der Presse auf dem gleichen Schwenkzapfen (10) oder auf getrennten Schwenkzapfen montiert sind oder durch Organe gebildet werden, welche von einer linearen Verstelung angetrieben werden.

6. Bindevorrichtung nach Anspruch 5, dadurch gekennzeichnet, daß die Garnführungsorgane durch zwei als Paar angeordnete Arme (11, 12) gebildet werden, die miteinander zu einer Einheit verbunden sind (Stützteil 9), auf dem Chassis der Presse um ein und denselben Punkt (10) schwenkbar montiert sind und sich durch Schwenken in gemeinsamer Weise zur Durchführung der Bindung verstellen.

7. Bindevorrichtung nach Anspruch 6, dadurch gekennzeichnet, daß wenigstens die freien Enden (11', 12') der Garnführungsarme (11, 12) voneinander getrennt sind, um bei der Schwenkbewegung der Garnführungsarme im Verlaufe der Bindung zwei schraubenförmige Garnwindungen um den Ballen zu bilden, die im gegenseitigen Abstand von einer erforderlichen Schrittweite angeordnet sind.

8. Bindevorrichtung nach Anspruch 5, 6 oder 7, dadurch gekennzeichnet, daß der Schwenkmontagepunkt für die Garnführungsarme (11, 12) (Achse 10) auf der Presse im seitlichen Abstand nach einer Seite der Längsachse dieser Presse hin angeordnet ist, vorzugsweise zu der Seite hin, welche der Startstellung des Bindevorganges entspricht, um eine Konzentration der Garnwindungen um den Ballen am Ende des Bindevorganges an dem korespondierenden Ende des Ballens zu erhalten.

9. Presse für zylindrische oder runde Ballen, die mit einer Bindevorrichtung nach irgendeinem der voranstehenden Ansprüche ausgerüstet ist.

FIG. 1

FIG. 2

FIG. 3